(19) Europäisches Patentamt / European Patent Office / Office européen des brevets

(11) **EP 4 063 932 B1**

(12) **EUROPEAN PATENT SPECIFICATION**

(45) Date of publication and mention
of the grant of the patent:
**12.03.2025  Bulletin 2025/11**

(21) Application number: **20899104.2**

(22) Date of filing: **08.12.2020**

(51) International Patent Classification (IPC):
**G02B 21/00** *(2006.01)*    **G02B 21/34** *(2006.01)*

(52) Cooperative Patent Classification (CPC):
**G06V 20/693; G01N 15/0227; G01N 15/1429;**
**G01N 15/1433; G06V 20/698; H04N 23/69;**
G01N 15/075; G01N 2015/1006; G01N 2015/1493;
G01N 2015/1497; G02B 21/365; H04N 7/183

(86) International application number:
**PCT/CN2020/134569**

(87) International publication number:
**WO 2021/115265 (17.06.2021 Gazette 2021/24)**

(54) **MICROSCOPIC APPARATUS AND IMAGE PROCESSING APPARATUS**

MIKROSKOPISCHE VORRICHTUNG UND BILDVERARBEITUNGSVORRICHTUNG

APPAREIL MICROSCOPIQUE ET APPAREIL DE TRAITEMENT D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.12.2019  CN 201911270215**

(43) Date of publication of application:
**28.09.2022  Bulletin 2022/39**

(73) Proprietor: **Shanghai Ruiyu Biotech Co. Ltd.**
**Shanghai 201619 (CN)**

(72) Inventors:
• **CHEN, Rui**
**Shanghai 201619 (CN)**

• **LUO, Puwen**
**Shanghai 201619 (CN)**
• **XIA, Haohan**
**Shanghai 201619 (CN)**

(74) Representative: **Wang, Bo**
**Panovision IP**
**Ebersberger Straße 3**
**85570 Markt Schwaben (DE)**

(56) References cited:
EP-A2- 3 300 001       CN-A- 103 119 496
CN-A- 103 119 496      CN-A- 110 823 897
CN-A- 110 836 893      CN-U- 207 882 555
CN-U- 211 955 230      JP-A- 2000 075 216
JP-A- 2000 075 216     US-A1- 2017 329 123
US-A1- 2018 130 233

**Description**

**TECHNICAL FIELD**

The present disclosure relates to a microscopic device and an image processing device.

**BACKGROUND**

At present, a sample plate for cell counting or analysis usually includes one or more sample cells. The sample cells are used to accommodate cell samples. The count, concentration, size, and other parameters of cell samples are obtained through a microscopic imaging system and an image analysis system. However, the detection of these parameters depends on the observation ability of the microscope or the microscopic imaging system. The most fundamental and important feature parameter is the magnification, and the actual magnification of many microscopic devices on the market is inconsistent with their nominal value.

At present, the calibration of the magnification of the microscope mainly adopts a micrometer technique or other similar techniques, and the actual magnification of the microscope is calibrated based on the cooperation of an eyepiece micrometer and an objective micrometer. For example, the actual magnification of the microscope is determined by comparing a known size of the spacing in a scale with a size obtained in the microscopic imaging system. However, these technologies have certain defects. When the eyepiece or objective is replaced, the actual magnification of the microscope needs to be recalibrated, and at this time, the cell samples need to be removed, which leads to the repetition and trouble of the operation. The original visual field for observation needs to be searched again, which may lead to a movement of the cell samples in the sample cell and affect an observation result.

Therefore, it is very significant to measure the magnification of the microscope or microscopic imaging system. However, the existing cell counting plates do not allow accurate calibration of the magnification of the microscope, resulting in the inconsistency between the detected parameters and the actual parameters, and affection of the accuracy of the final result.

US 2018/130233 A1 discloses an embodiment of a calibration element for an analytical microscope that comprises a substantially non-periodic pattern of features that exhibit contrast when illuminated by a light beam.

**SUMMARY**

The invention is set out in the appended set of claims.

Other features of the present disclosure and advantages thereof may become apparent from the following detailed description of embodiments of the present disclosure with reference to the drawings.

**BRIEF DESCRIPTION OF THE DRAWINGS**

The drawings forming a portion of the present disclosure describe embodiments of the present disclosure and are used together with the present disclosure to explain the principles of the present disclosure.

Referring to the drawings, the present disclosure may be more clearly understood according to the following detailed description, wherein:

FIG. 1 is a schematic diagram illustrating a microscopic device according to some embodiments of the present disclosure;

FIG. 2 is a schematic diagram illustrating a sample plate according to some embodiments of the present disclosure;

FIG. 3 is another schematic diagram illustrating a sample plate according to some embodiments of the present disclosure;

FIG. 4 is another schematic diagram illustrating a sample plate according to some embodiments of the present disclosure;

FIG. 5 is another schematic diagram illustrating a sample plate according to some embodiments of the present disclosure;

FIG. 6A is a schematic diagram illustrating a scaling pattern on a sample plate according to some embodiments of the present disclosure;

FIG. 6B is a schematic diagram illustrating an image of the scaling pattern on a sample plate according to some embodiments of the present disclosure;

FIG. 7 is another schematic diagram illustrating a sample plate according to some embodiments of the present disclosure;

FIG. 8 is another schematic diagram illustrating a sample plate according to some embodiments of the present disclosure;

FIG. 9 is another schematic diagram illustrating a sample plate according to some embodiments of the present disclosure;

FIG. 10 is another schematic diagram illustrating a sample plate according to some embodiments of the present disclosure;

FIG. 11 is a schematic diagram illustrating a set of tick marks of the scaling pattern on the sample plate according to some embodiments of the present disclosure;

FIG. 12 is a flowchart illustrating a process for operating the microscopic device according to some embodiments of the present disclosure;

FIG. 13 is a schematic diagram illustrating an arrangement direction of pixels of an image sensor according to some embodiments of the present disclosure;

FIG. 14 is another schematic diagram illustrating a microscopic device according to some embodiments of the present disclosure;

FIG. 15 is a schematic diagram illustrating an image processing device according to some embodiments of the present disclosure;

FIG. 16 is a schematic diagram illustrating a microscopic image according to some embodiments of the present disclosure;

FIG. 17 is another schematic diagram illustrating a microscopic image according to some embodiments of the present disclosure;

FIG. 18 is another schematic diagram illustrating a microscopic image according to some embodiments of the present disclosure;

FIG. 19 is another schematic diagram illustrating a microscopic device according to some embodiments of the present disclosure;

FIG. 20 is another schematic diagram illustrating a microscopic image according to some embodiments of the present disclosure; and

FIG. 21 is a schematic diagram illustrating a microscopic analysis system according to some embodiments of the present disclosure.

It should be noted that in some embodiments described below, the same number is used between different drawings to indicate the same part or a part with the same function, and the repeated description thereof is omitted. In the present disclosure, similar labels and letters are used to indicate similar items. Therefore, once an item is defined in a drawing, a further discussion may not need to be described in subsequent drawings.

In order to facilitate understanding, position, size, range of each structure shown in the drawings or the like may not indicate the actual position, size, or range in some cases. Therefore, the present disclosure is not limited to the position, dimension, ranges disclosed in the drawings, or the like.

## DETAILED DESCRIPTION

The embodiments of the present disclosure are described in detail with reference to the drawings. It should be noted that unless stated otherwise or obvious from the context, the relative arrangement of components and steps, numerical expressions, and values set forth in these embodiments do not limit the scope of the present disclosure.

The following description of at least one embodiment is merely illustrative in nature and is in no way intended to limit the present disclosure and its application or use.

The techniques, methods, and devices known to those of ordinary skill in the art may not be discussed in detail, but where appropriate, such techniques, methods, and devices should be considered as a part of the present disclosure.

In all the examples shown and discussed in the present disclosure, any specific value should be interpreted as merely for example, and not as a limitation. Therefore, other examples of the embodiments may have different values.

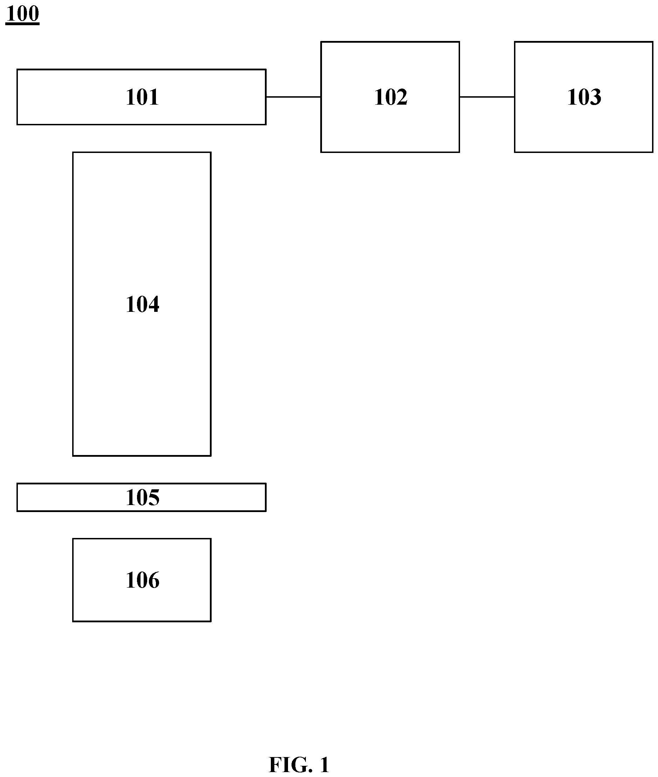

FIG. 1 is a schematic diagram illustrating a microscopic device according to some embodiments of the present disclosure.

As shown in FIG. 1, the microscopic device 100 includes an image sensor 101, a memory 102, a processor 103, an optical imaging device 104, a sample table 105, and a light source 106. During an operation, a sample plate is arranged on the sample table 105. The light source 106 may emit light towards the sample plate. The optical imaging device 104 may include, for example, an objective and an eyepiece (not shown). Each of the objective and the eyepiece may be composed of one or more sets of lenses. An optical image generated by the optical device 104 is received by the image sensor 101 and converted into a digital image by the image sensor 101. The image sensor may be, for example, a charge-coupled device (CCD), a complementary metal-oxide semiconductor (CMOS), or the like. In some embodiments according to the present disclosure, an image capturing device such as a mobile phone, or a camera may also be arranged in an optical path. The image capturing device may also include image sensors, and may capture an image of a sample in the sample plate through the optical device 104.

The digital image captured by the image sensor 101 may be stored in the memory 102, and the processor 103 may read and process the digital image in the memory 102.

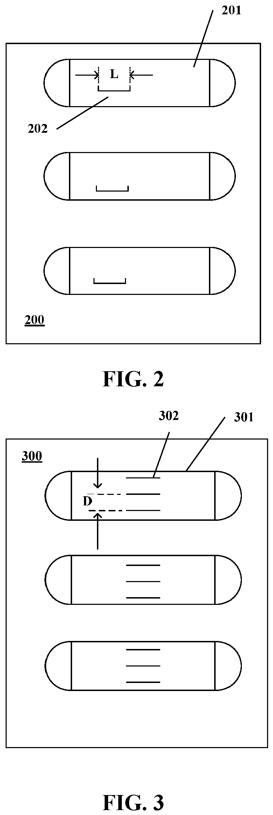

FIG. 2 is a schematic diagram illustrating a sample plate according to some embodiments of the present disclosure. As shown in FIG. 2, a sample plate 200 may include a plurality of sample cells 201 in which samples may be accommodated. In addition, the sample plate 200 also includes a scaling pattern 202.

In the embodiments shown in FIG. 2, the scaling pattern 202 is located at the bottom of a sample cell (i.e., on the surface where the sample cell contacts the sample). When capturing an image of a sample by the microscope device 100, the optical imaging device 104 may focus on the bottom of the sample cell, and set the scaling pattern 202 at the bottom of the sample cell to capture a clear image of the scaling pattern while capturing the sample image. The scaling pattern 202 may be a line segment along a horizontal direction with a length of L. For example, in some embodiments, L may be 1 $\mu$m-100 $\mu$m. Using the scaling pattern 202, the magnification of the microscopic device 100 may be accurately obtained.

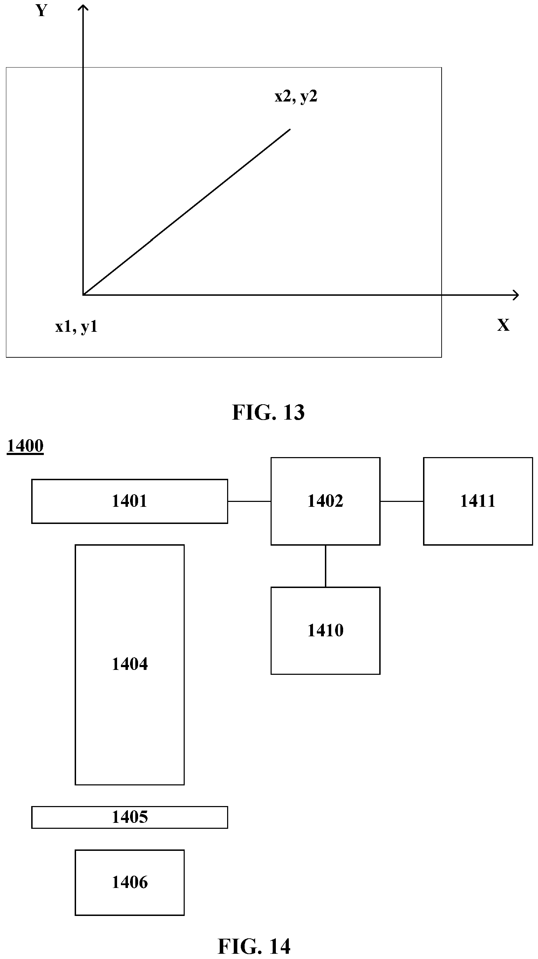

For example, as shown in FIG. 13, for the image sensor 101 whose pixels are evenly arranged in two directions perpendicular to each other (the X direction and the Y direction), if coordinates at both ends of the line segment of the scaling pattern 202 are (x1, y1) and (x2, y2) in the digital image generated by the image sensor 101, respectively. Then, the coordinates (x1, y1) and (x2, y2) represent positions of the pixels corresponding to both ends of the line segment on the image sensor 101. Then, a size k of an image of the line segment generated by the line segment on the sample plate on the image sensor 101 may be determined based on a formula (1):

$$K = D \cdot sqrt[(x2-x1)^2 + (y2-y1)^2] \qquad (1)$$

where D represents spacing between adjacent pixels in the image sensor 101, that is, a distance from a center of a pixel to a center of an adjacent pixel of the pixel along the X direction or Y direction. The function "sqrt" represents determining a square root.

Then, a magnification M of the optical imaging device 104 of the microscope device 100 may be determined based on the following formula (2):

$$M = K/L \qquad (2)$$

In the above method, an actual magnification of the microscopic device 100 may be accurately obtained.

In the above embodiment, a pixel array of the image sensor 101 may be a rectangular array, and the spacing of the adjacent pixels may be the same in the X direction and the Y direction. In other embodiments according to the present disclosure, the spacing between the adjacent pixels of the image sensor 101 may be different in the X direction and the Y direction. For example, if the spacing between the adjacent pixels along the X direction is D1 and the spacing between adjacent pixels along the Y direction is D2, the size k of the image of the line segment generated by the line segment on the sample plate on the image sensor 101 may be determined based on the following formula (3):

$$K = sqrt[(D1)^2 \cdot (x2-x1)^2 + (D2)^2 \cdot (y2-y1)^2] \qquad (3)$$

Then, the actual magnification M of the microscopic device 100 may be accurately obtained.

The above operation of determining the actual magnification is performed by the processor 103 of the microscope device 100. For example, the spacing between adjacent pixels of the image sensor 101 may be stored in the memory 102 in advance. When the image sensor 101 generates a digital image of the sample plate 200, the digital image may be stored in the memory 102.

Then, the processor 103 may read the digital image from the memory 102 and recognize the scaling pattern in the digital image. Next, the processor 103 may read the spacing between adjacent pixels of the image sensor 101 from the memory and determine the actual magnification M of the microscopic device 101 based on the above formulas (1)-(3).

In addition, in some embodiments according to the present disclosure, for the sample plate 200 with a plurality of sample cells 201, the magnification M may also be determined using the following method.

For the sample plate 200 shown in FIG. 2 with three sample cells 201, the corresponding magnifications M1, M2, and M3 may be determined respectively based on the scaling pattern 202 on each of the sample cells 201, and then the actual magnification M of the microscopic device may be calculated by a formula (4):

$$M = (M1+M2+M3)/3 \qquad (4)$$

That is, an average value of the magnifications M1, M2, and M3 are designated as the actual magnification M of the microscopic device. In this way, the calculation error may be reduced and the accuracy of magnification may be further improved.

In addition, in other embodiments according to the present disclosure, a sum K' of the line segments of each scaling pattern 202 may be determined based on the following formula (5):

$$K' = D \cdot sqrt[\ (x2-x1)^2+(y2-y1)^2]$$

$$+D \cdot sqrt[\ (x3-x4)^2+(y3-y4)^2]$$

$$+D \cdot sqrt[\ (x5-x6)^2+(y5-y6)^2] \qquad (5)$$

where (x1, y1) and (x2, y2) are the coordinates of both ends of the line segment of the scaling pattern of a first sample cell 202 in the upper of FIG. 2 in the digital image; (x3, y3) and (x4, y4) are the coordinates of both ends of the line segment of the scaling pattern of a second sample cell 202 in the upper of FIG. 2 in the digital image, (x5, y5) and (x6, y6) are the coordinates of both ends of the line segment of the scaling pattern of a third sample cell 202 in the lower of Fig. 2 in the digital image.

Then, the actual magnification M of the microscopic device may be determined based on a formula (6):

$$M=K'/(3L) \qquad (6)$$

In this way, the calculation error may be reduced and the accuracy of magnification may be further improved.

The above embodiments briefly describe how to determine the actual magnification of the microscopic device 100 based on the scaling pattern on the sample plate. It should be understood that the present disclosure is not limited to the above methods. Under the instruction and enlightenment of the present disclosure, those skilled in the art may also adopt other ways to determine the actual magnification of the microscopic device 100 based on the scaling pattern.

FIG. 3 is another schematic diagram illustrating an sample plate according to some embodiments of the present disclosure. As shown in FIG. 3, a sample plate 300 may include a plurality of sample cells 301 in which samples to be observed and captured may be accommodated. In addition, the sample plate 300 also has a scaling pattern 302.

In the embodiments shown in FIG. 3, the scaling pattern 302 may be located at the bottom of the sample cell. The scaling pattern 302 may be tick marks arranged at an equal interval, each tick mark may extend along the horizontal direction (a first direction), and spacing of the tick marks in the vertical direction (a second direction) is D. In some embodiments according to the present disclosure, the spacing D may be, for example, 1 $\mu$m -10 $\mu$m. The magnification of the microscopic device may be accurately determined based on the scaling pattern 302.

For example, based on the digital image generated by the image sensor 101, the processor 103 may obtain a coordinate (x1', y1') of a point on a tick mark in the scaling pattern 302 and a coordinate (x2', y2') of an intersection point of a line along the direction vertical to the tick mark and passing through point (x1', y1') and an adjacent tick mark.

Using a method similar to the method described above, the actual magnification of the microscopic device 100 may be determined.

In the example shown in FIG. 3, a plurality of tick marks 302 may be arranged on each sample cell. When the magnification of the microscopic device 100 is relatively large, the actual magnification may be accurately determined even if only a portion of a sample cell is included in the visual field.

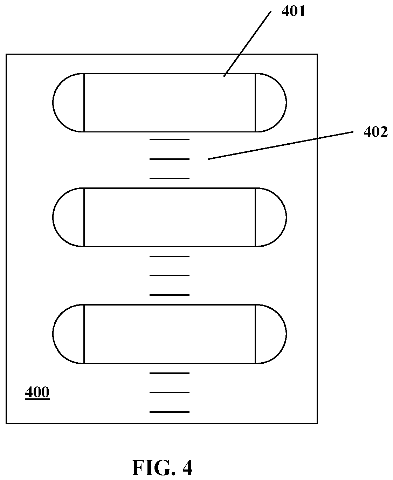

FIG. 4 is another schematic diagram illustrating a sample plate 400 according to some embodiments of the present disclosure. As shown in FIG. 4, in the sample plate 400, the scaling pattern 402 may be arranged outside a sample cell 401. In this way, interference of the scaling pattern 402 on the sample in the sample cell 401 may be avoided, and a sample may be more clearly observed and analyzed. In order to capture a clear image of the scaling pattern 402, the scaling pattern 402 may be located on the same plane as the bottom of the sample cell.

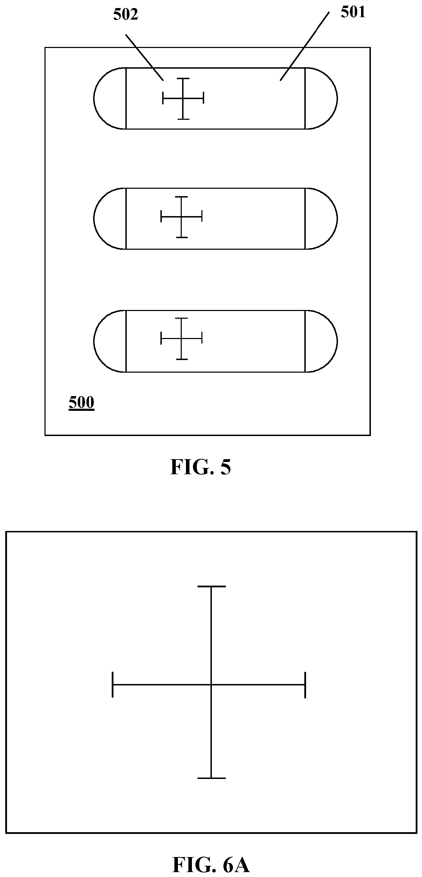

FIG. 5 is another schematic diagram illustrating a sample plate 500 according to some embodiments of the present disclosure. As shown in FIG. 5, a sample plate 500 may include a plurality of sample cells 501. A cross-shaped scaling pattern 502 may be arranged at the bottom of each of the sample cells 501. The scaling pattern 502 may include two line segments perpendicular to each other, and lengths of the two line segments may be the same or different.

Using the scaling pattern 502 on the sample plate 500 of FIG. 5, the magnification of the microscopic device may also be determined from the digital image generated by the image sensor 101. For example, the magnification of the microscopic device may be determined based on the above formulas (1)-(2) and the length of any one of the two line segments in the scaling pattern 502. Alternatively, two magnifications may be determined respectively based on each of the two line segments, and then an average value of the two magnifications may be designated as the magnification of the microscopic device.

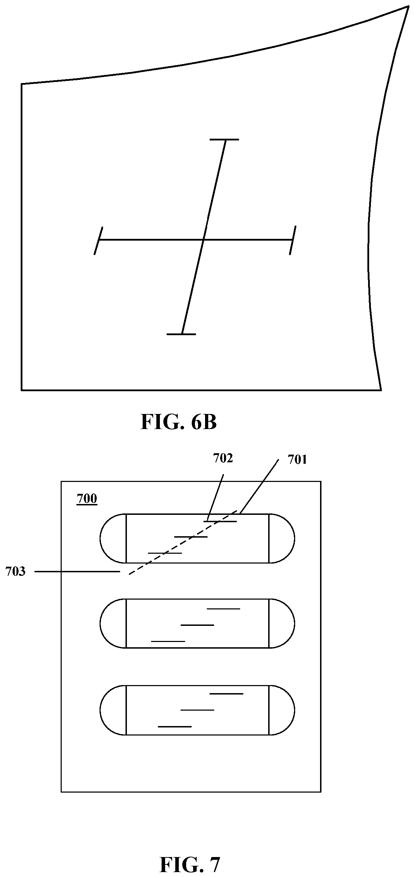

In addition, the scaling pattern 502 on the sample plate 500 of FIG. 5 may also be used for identifying and correcting a distortion of the microscopic device 100. For example, when there is no distortion in the optical imaging device 104 of the microscope device 100, an image of the scaling pattern 502 should also be two line segments perpendicular to each other, as shown in FIG. 6A. However, if there is a distortion in the optical imaging device 104 of the microscope device 100, the two line segments in the image of the scaling pattern 502 may no longer be vertical, as shown in FIG. 6B. Based on the image of the two line segments, the processor 103 may recognize the distortion of the optical imaging device of the microscope device 100. Further, the processor 103 may also correct the digital image generated by the image sensor 101 based on known parameters such as a size of the scaling pattern 502, to improve the image quality.

The sample plate according to the present disclosure and how to obtain the magnification of the microscopic device based on the scaling pattern on the sample plate are described above. It should be understood that the present disclosure may not be limited to the above embodiments.

For example, FIG. 7 is another schematic diagram illustrating a sample plate 700 according to some embodiments of the present disclosure. As shown in FIG. 7, the sample plate 700 may include a plurality of sample cells 701 extending in a horizontal direction, and a scaling pattern 702 may be arranged at the bottom of each of the sample cells 701. The scaling pattern 702 may include a plurality of tick marks, each of the plurality of tick marks may extend in a horizontal direction (a first direction), and the plurality of tick marks may be arranged in the direction of a dotted line 703 (a second direction). The direction of the dotted line 703 is not a vertical direction perpendicular to the horizontal direction. In this way, the scaling pattern 702 may cover most of the area of the plurality of sample cells 701. When the magnification of the microscopic device 100 is large and the visual field may cover only a portion of the plurality of sample cells 701, this form of the scaling pattern 702 may ensure that at least one complete tick mark appears in the visual field. In this way, the magnification of the microscopic device may be accurately determined no matter where the sample is observed in the plurality of sample cells 701.

In addition, in some embodiments according to the present disclosure, the orientation of the sample plate and the plurality of sample cells may also be determined according to the scaling pattern on the sample plate. For example, the sample plate 300 shown in FIG. 3 may include a plurality of sample cells 301 arranged in a vertical direction, and each sample cell 301 may extend in a horizontal direction.

When observing and photographing samples in the plurality of sample cells 301 through the microscope device 100, it may be impossible to observe and photograph all the samples in the plurality of sample cells 301 at the same time due to the visual field and other reasons. Therefore, it is necessary to move the sample table 105 so that the sample plate is moved in the visual field, to observe and photograph different sample cells 301 on the sample plate 300 or different portions of the same sample cell 301.

As shown in FIG. 3, each tick mark in the scaling pattern 302 may extend in the horizontal direction, that is, an extension direction of a tick mark may be the same as the arrangement direction of the sample cell, and the arrangement directions of the plurality of tick marks may be the same as the arrangement directions of the plurality of sample cells. Therefore, although only a portion of the plurality of sample cells may be displayed in the visual field or the image captured by the microscopic device, to perform an operation of observing and photographing different sample cells 301 or different areas of the same sample cell 301, the processor 103 or the operator may determine the extension directions and arrangement directions of the plurality of sample cells based on the extension directions and arrangement directions of the plurality of the tick marks, and move the sample plate 300 on the sample table 105 based on the determined extension directions and arrangement directions of the plurality of sample cells.

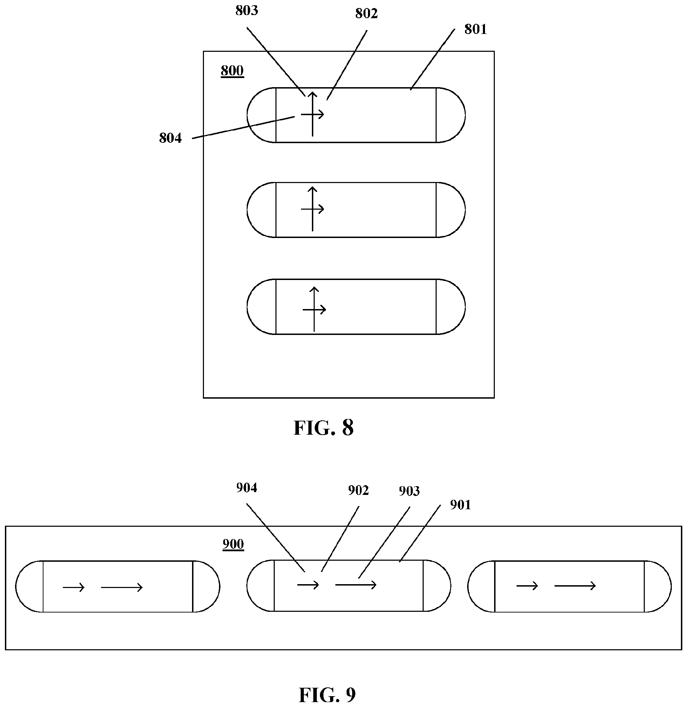

FIG. 8 is another schematic diagram illustrating a sample plate 800 according to some embodiments of the present disclosure. As shown in FIG. 8, the sample plate 800 may include a plurality of sample cells 801 extending in the horizontal direction, and the plurality of sample cells 801 may be arranged in the vertical direction. A scaling pattern 802 may be arranged at the bottom of each of the plurality of sample cells 801. The scaling pattern 802 may include a first mark for determining an arrangement direction and an extension direction of a sample cell 801. The first mark may be composed of two arrows 803 and 804 perpendicular to each other, wherein the arrow 803 may extend in the vertical direction and the arrow 804 may extend in the horizontal direction. In addition, in the example, the longer arrow may indicate the arrangement direction of the sample cell, and the shorter arrow may indicate the extension direction of the sample cell. As shown in FIG. 8, a length of the arrow 803 may be greater than a length of the arrow 804. Therefore, a plurality of sample cells 801 being arranged in the vertical direction may be determined based on the extension direction of the arrow 803, and the sample cell 802 extending in the horizontal direction may be determined based on the extension direction of the arrow 804.

FIG. 9 is another schematic diagram illustrating a sample plate 900 according to some embodiments of the present disclosure. As shown in Fig. 9, the sample plate 900 may include a plurality of sample cells 901 arranged in the horizontal direction, and each of the plurality of sample cells 901 may extend in the horizontal direction. A scaling pattern 902 may be arranged at the bottom of each sample cell 901. The scaling pattern 902 may include a first mark for determining an arrangement direction and an extension direction of a sample cell 901. The first mark may be composed of arrows 903 and 904, wherein the longer arrow 903 may indicate the arrangement direction of the sample cell 901, and the shorter arrow 904 may indicate the extension direction of the sample cell 901. In this way, through the extension direction of arrows 903 and 904, the plurality of sample cells 901 arranged in the horizontal direction may be determined, and each sample cell 901 extending in the horizontal direction may also be determined.

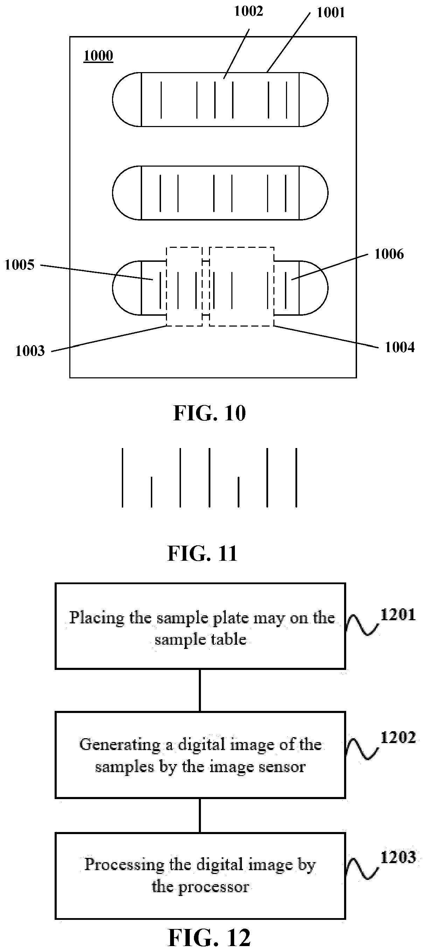

FIG. 10 is another schematic diagram illustrating a sample plate 1000 according to some embodiments of the present disclosure. As shown in FIG. 10, the sample plate 1000 may include a plurality of sample cells 1001 arranged in a vertical direction, and each of the plurality of the sample cells 1001 may extend in the horizontal direction. A scaling pattern 1002 may be arranged at the bottom of a sample cell 1001. The scaling pattern 1002 includes a second mark 1004 for identifying the sample plate and a third mark 1003 for identifying the sample cell. The second mark 1004 and the third mark 1003 may be composed of a plurality of tick marks, which may be arranged in the horizontal direction, and each of the plurality of the tick marks may extend in the vertical direction. The leftmost tick mark 1005 and the rightmost tick mark 1006 may represent a beginning and an end of the second mark 1004 and the third identification 1003. The second mark 1004 and the third mark 1003 may be between the tick mark 1005 and the tick mark 1006. A serial number of the sample plate and a serial number of the sample cell may be determined respectively based on the second mark 1004 and the third mark 1003.

As shown in FIG. 10, in the lower sample cell 1001, the third mark 1003 includes two tick marks, and the serial number of the sample cell where the third mark 1003 is located is determined as 11. In the upper sample cell 1001, the third mark 1003 includes a tick mark, and based on spacing between the tick marks, a tick mark is missed in front of this tick mark. Therefore, the serial number of the sample cell where the third mark 1003 is located may be determined as 01. Similarly, for the third mark 1003 in the middle sample cell 1001, the serial number of the sample cell may be determined as 10.

Similarly, in the second mark 1004, based on the spacing between the tick marks, a missing tick mark may represent 0, and then the serial number of the sample plate 1000 may be determined as 1101.

In addition, in some embodiments of the present disclosure, other ways may also be used to represent a number 0 or 1. For example, in a set of tick marks as shown in FIG. 11, 0 and 1 may be represented by tick marks of different lengths. The longer tick mark may represent 1 and the shorter tick mark may represent 0. The set of tick marks in FIG. 11 may be determined as 1011.

It should be understood that under the instruction and enlightenment of the present disclosure, those skilled in the art may combine the first mark, the second mark, the third mark, and the tick mark in other ways as a scaling pattern.

FIG. 12 is a flowchart illustrating a process for operating the microscopic device 100 according to some embodiments of the present disclosure.

As shown in FIG. 12, the sample plate may be placed on the sample table 105 (operation 1201). Samples to be observed and captured may be located in the sample cells of the sample plate.

Then, a digital image of the samples is generated by the image sensor 101 (operation 1202). The optical image generated by the optical imaging device 104 of the microscopic device 100 is received by the image sensor 101 and the digital image is generated. The digital image may be stored in the memory 102.

Then, the processor 103 may read the digital image from the memory 102 and perform various processes (operation 1203). For example, as described above, based on the scaling pattern in the digital image, the magnification of the microscopic device 100 may be determined; the extension direction and arrangement direction of the sample cell may be determined; the (number of) sample plate may be determined; or the (number of) sample cell may be determined, or the like.

FIG. 14 is another schematic diagram illustrating a microscopic device according to some embodiments of the present disclosure. As shown in FIG. 14, a microscopic device 1400 may be an optical microscopic device, including an image sensor 1401, a memory 1402, a transmission device 1411, an inputting device 1410, an optical imaging device 1404, a sample table 1405, and a light source 1406. The image sensor 1401, the optical imaging device 1404, the sample table 1405, and the light source 1406 may be similar to the corresponding devices in the microscopic device 100 shown in FIG. 1, so a detailed description may not be repeated herein.

The sample plate with the scaling pattern may be arranged on the sample table 1405, and the optical imaging device 1404 generates an optical image of samples. In addition, the scaling pattern in the sample plate is also be included in the optical image. As described above, the scaling pattern is configured to determine the magnification of the microscopic device, determine the direction of the sample plate, identify the sample plate or sample cell, or the like. The image sensor 1401 converts an optical image into a digital image.

In addition, a user of the microscope device 1400 may input information about the scaling pattern (i.e., pattern information) by the inputting device 1410. The pattern information includes size information of the scaling pattern. For example, when the scaling pattern is the scaling pattern 202 shown in FIG. 2, the pattern information may include information about the length L of the line segment. When the scaling pattern is the scaling pattern 302 shown in FIG. 3, the pattern information may include the information of the spacing D of the tick mark.

In addition, the pattern information may include an identifier of the scaling pattern. For example, the user may input a unique serial number of the scaling pattern by the inputting device 1410. The serial number of the scaling pattern may be stored in a database in association with relevant information of the scaling pattern. Based on the serial number, the scaling pattern corresponding to the serial number and the relevant information of the scaling pattern, such as size, spacing, etc., may be found in the database.

In some illustrative embodiments, a type of the sample plate may also be determined by the unique serial number of the scaling pattern. For example, in the database, the serial number of the scaling pattern may also be stored in association with relevant parameters of the sample plate. For example, the relevant parameters of the sample plate may include: the type of the sample plate, the numbers of sample cells, the depth of sample cells, or the like.

In addition, the user may also input information about the sample (first sample information) by the inputting device 1410. For example, the information may include the type of sample. In this way, based on the information about the sample, the type of the samples such as red blood cells, yeast, algae, etc., may be determined.

The transmission device 1411 may transmit the digital image to other devices. For example, the transmission device 1411 may transmit the digital image to a remote server, such as a cloud server or the like. The server may include an image processing device to further process the received image.

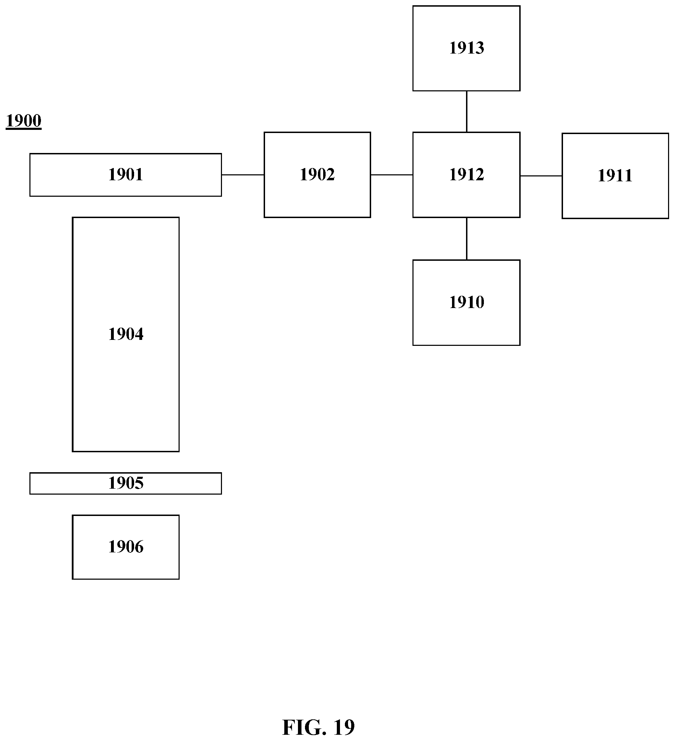

FIG. 19 is another schematic diagram illustrating a microscopic device according to some embodiments of the present disclosure. As shown in FIG. 19, the microscopic device 1900 may include an image sensor 1901, a memory 1902, a transmission device 1911, an inputting device 1910, an optical imaging device 1904, a sample table 1905, and a light source 1906. These components are similar to the corresponding components of the microscopic device 1400 shown in FIG. 14, and may not be repeated herein. In addition, as shown in FIG. 19, the microscopic device 1900 may also include a controller 1912 and a receiving device 1913. The receiving device 1913 may receive information transmitted by external devices, and the controller 1912 may control the operation of the microscopic device 1900 based on the information. In some embodiments according to the present disclosure, the user may interact with the microscopic device 1900 by a mobile device (e.g., a mobile phone, tablet, laptop, etc.). For example, the microscopic device 1900 may transmit a captured microscopic image to the mobile device and display the microscopic image on the mobile device. The user may adjust a photographing parameter (such as magnification, observation area, etc.) of the microscopic device 1900 based on a captured microscopic image, and transmit the photographing parameter to the microscopic device 1900 by the mobile device. Then, the microscopic device 1900 may adjust based on the photographing parameter included in the information transmitted by the mobile device, re-capture the microscopic image, and transmit the new microscopic image to the mobile device.

In addition, an interaction between the microscopic device 1900 and the mobile device may be carried out directly or indirectly through, for example, a cloud server, which may not be limited by the present disclosure.

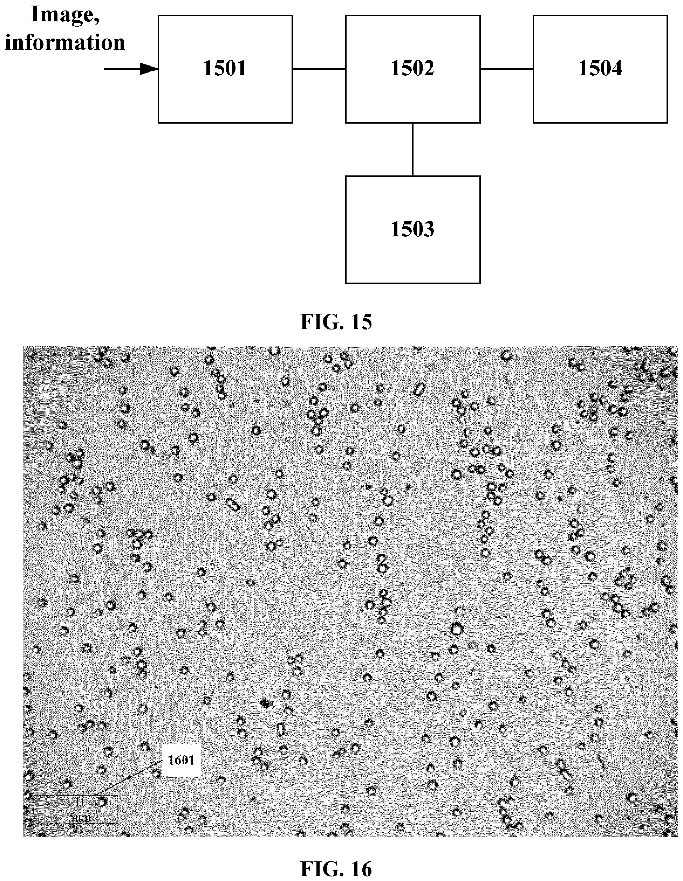

FIG. 15 is a schematic diagram illustrating an image processing device according to some embodiments of the present disclosure. As shown in FIG. 15, an image processing device 1500 may include a receiving device 1501, a storage device 1502, a processor 1503, and a transmission device 1504.

The receiving device 1501 receives a digital image captured by the above-mentioned microscopic device according to the present disclosure. A scaling pattern is included in the digital image.

In addition, in some embodiments according to the present disclosure, the receiving device 1501 may also receive pattern information and/or first sample information related to the digital image.

The storage device 1502 stores the digital image and various information received by the receiving device 1501.

The processor 1503 obtains the digital image and various information from the storage device 1502 and process the digital image. The processor 1503 determines the magnification of the microscopic device based on the scaling pattern in the digital image.

The transmission device 1504 may transmit the digital image and information related to the digital image (e.g., the magnification, etc.) to, for example, a mobile device or the like.

In some embodiments according to the present disclosure, since specifications of the sample plates may be different, the parameters such as the length and/or spacing of the tick marks of the scaling pattern on the sample plates with different specifications may be different. In this case, the processor 1503 may also need to further combine the pattern information related to the digital image to determine the magnification of the microscopic device.

In addition, in some embodiments according to the present disclosure, the processor 1503 may also determine the direction of the sample plate where the sample is located based on the pattern information. For example, when the sample plate is the sample plate 900 shown in FIG. 9, the pattern information may indicate that the direction of the arrow is the same as the longitudinal direction of the sample plate 900. In this way, the processor 1503 may recognize the direction of the arrow of the scaling pattern from the digital image, and designate the direction of the arrow as the longitudinal direction of the sample plate.

Further, in some embodiments according to the present disclosure, the processor 1503 may classify digital images based on pattern information. For example, the digital images may be classified based on the size of the scaling pattern, and digital images with the same size of the scaling pattern may be divided into a group. When browsing the group of digital images later, the digital images may be scaled to make the size of the scaling pattern the same, so that users may intuitively observe and compare the relative size of the samples in each digital image.

Further, in some embodiments according to the present disclosure, the processor 1503 may generate a first image from the pattern information and integrate the first image into the digital image. For example, as shown in FIG. 16, for the sample plate shown in FIG. 2, the processor 1503 may obtain that the length L of the tick mark is 5 μm based on the pattern information. The processor 1503 may generate a message with the word "5 μm," and the first image may be integrated into the digital image. In the synthesized digital image, the value of the length L of the tick mark may be marked near the tick mark, so that the user may more intuitively understand the size of the sample when browsing the digital image.

In addition, the processor 1503 may classify the digital images based on the first sample information. For example, when the first sample information includes the type of the samples, the processor 1503 may determine that the digital images of samples of the same type belong to the same group.

In addition, in some embodiments according to the present disclosure, the first sample information may also include other information such as production date, photographing date, source, copyright information, or the like. The processor 1503 may also divide the digital images with the same date into a group.

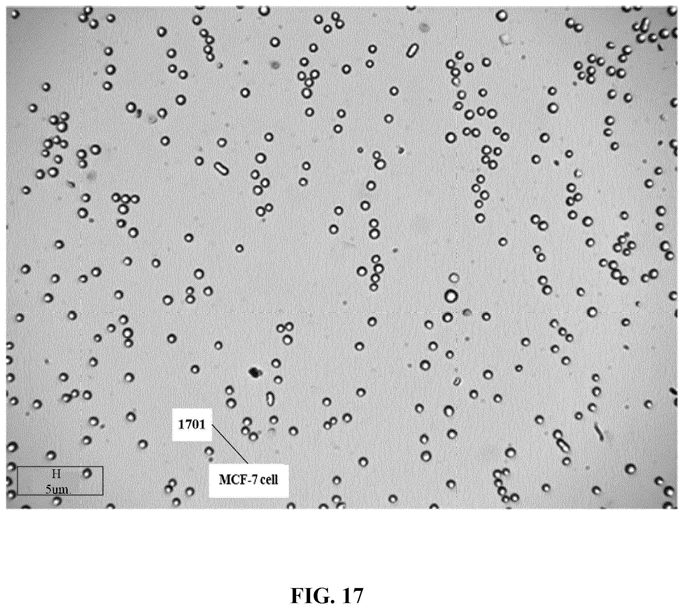

In some embodiments according to the present disclosure, the processor 1503 may generate a second image based on the first sample information and integrate the second image into the digital image. As shown in FIG. 17, when the first sample information indicates that the type of the samples is human breast cancer cells (MCF-7 cells), the processor 1503 may generate a second image 1701 including the word "MCF-7 cells" and integrate the image 1701 into the digital image. In this way, when the digital image is displayed on a display, for example, the type of the sample may be directly known.

In some embodiments according to the present disclosure, a client may find and download the digital image from the server. For example, the client may enter a keyword, such as yeast cells, and the keyword may be transmitted to a remote server. The server may find digital images of yeast cells in all sample information in the database based on the keyword, and provide a list or thumbnails of these digital images to the client. The client may select and download a selected digital image and related information of the selected digital image based on the information provided by the server. Further, in some embodiments according to the present disclosure, the client may pay a fee to the server to obtain a license to use the selected digital image. After the server determines that the client has obtained the license, the selected digital image may be transmitted to the client.

Further, in some embodiments according to the present disclosure, the processor 1503 may analyze the digital image based on the scaling pattern to obtain second sample information related to the sample. The second sample information may include, for example, diameters of the samples, values of major axis and values of minor axis of the samples, a size of the visual field, a concentration of the samples and other information.

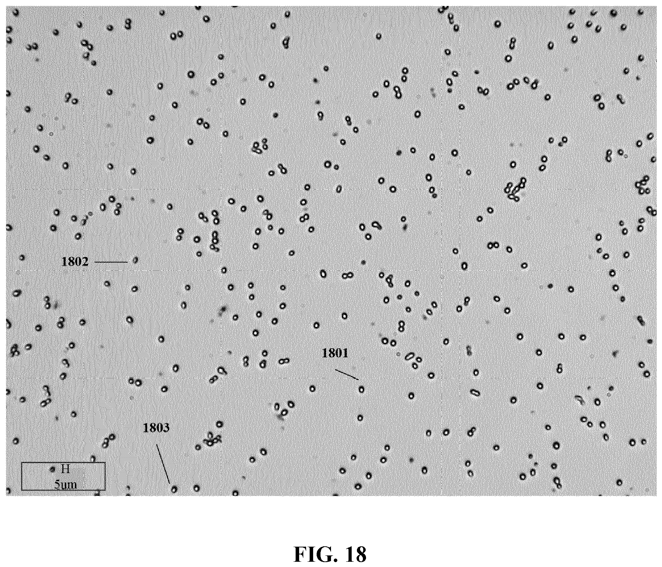

For example, FIG. 18 is another schematic diagram illustrating a microscopic image according to some embodiments of the present disclosure. As shown in FIG. 18, based on the pattern information, the processor 1503 may determine that the length unit of the scaling pattern in the digital image is 5 μm. Based on a determination that the length unit of the scaling pattern in the digital image is 5 μm, the magnification of the digital image in FIG. 18 may be determined as 9.8. Based on the first sample information, the processor 1503 may further determine that the type of sample in the digital image is yeast cells. Based on the information that the type of sample in the digital image is yeast cells, the processor 1503 may perform an image recognition operation on identifying yeast cells. For example, the processor 1503 may determine a yeast cell 1802 based on the image recognition operation and determine that the diameter of the yeast cell 1802 is 6 μm based on the scaling pattern, the diameter of the yeast cell 1802 may be stored in the second sample information.

Further, in some embodiments according to the present disclosure, the processor 1503 may determine a plurality of yeast cells by the image recognition operation and determine the diameter of each of the plurality of the yeast cells based on the scaling pattern. Then, the processor 1503 may store an average value of the diameters of the plurality of yeast cells in the second sample information as a diameter of the plurality of yeast cells.

For example, as shown in FIG. 18, the processor 1503 may identify yeast cells 1801, 1802, and 1803 from a digital image. Based on the scaling pattern, the diameter of these yeast cells may be determined as 9 μm, 6 μm, and 9 μm. The average value of the diameters is 8 μm. The processor 1503 may store the average value in the second sample information as the diameter value of the samples.

In addition, in some embodiments according to the present disclosure, the processor 1503 may identify 393 yeast cells from the digital image and determine the diameter of each of the 393 yeast cells, so that the average value of the diameters of the 393 yeast cells may also be obtained and stored in the second sample information.

In addition, the processor 1503 also determines the size of a visual field of photographing and the concentration of the samples from the digital image. As shown in FIG. 18, the processor 1503 may determine that the area of the sample plate in the digital image is $0.46 \times 0.35$ mm$^2$ based on the scaling pattern. In addition, as described above, the type of sample plate may also be determined based on the scaling pattern, so that the depth of the sample cell may be obtained as 0.5 μm. In this way, the processor 1503 may determine that the concentration of yeast cells is about $5 \times 10^6$/ml.

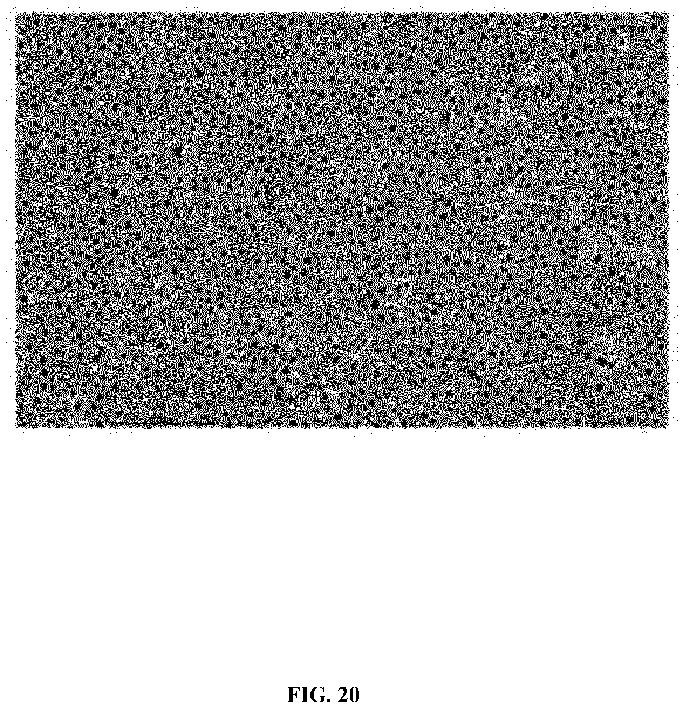

In addition, the processor 1503 may determine the value of the major axis and the value of the minor axis of the sample from the digital image. For example, FIG. 20 is another schematic diagram illustrating a microscopic image of chlorella according to some embodiments of the present disclosure. The processor 1503 may determine the value of the major axis and the value of the minor axis of each chlorella based on the scaling pattern in FIG. 20, and further determine that the average value of the minor axis of the chlorella is about 17.66 $\mu$m, and the value of the major axis of the chlorella is about 19.11 $\mu$m.

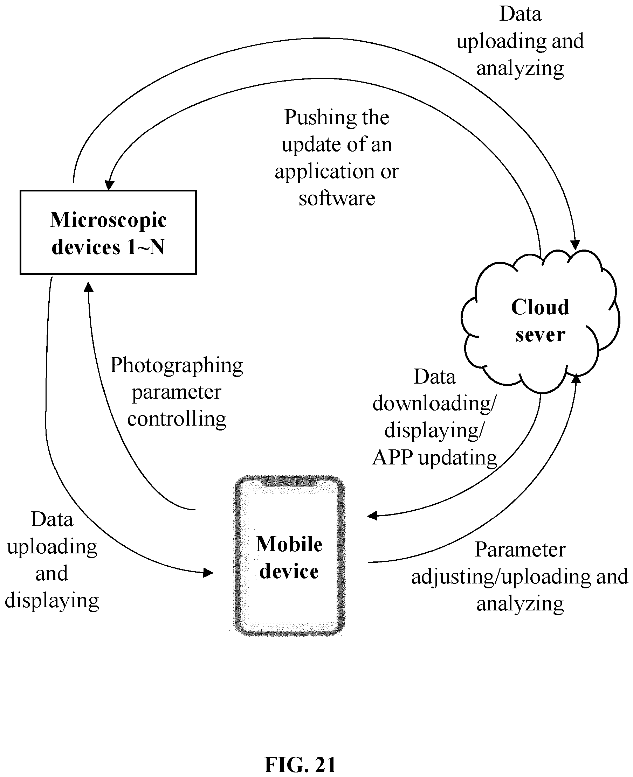

According to the embodiment of the present disclosure, a microscopic analysis system is also provided, including the microscopic device, the image processing device, the mobile device, etc. It should be understood that the image processing device of the present disclosure may be a single server or multiple servers, or a cloud server. As shown in FIG. 21, the mobile device may control the microscopic device by the cloud server (for example, adjusting the photographing parameter, etc.), or receive the microscopic image captured by the microscopic device by the cloud server. The cloud server may transmit an update of an application to the microscopic device and/or the mobile device. In addition, a plurality of microscopic devices 1~N may be connected to the cloud server at the same time. The mobile device may browse the image captured by a specified microscopic device or control the operation of the microscopic device as needed. The cloud server may store and analyze microscopic images captured by the plurality of microscopic devices, and may transmit the microscopic images and an analysis result to the mobile device.

Therefore, in the microscopic analysis system of the present disclosure, the microscopic device includes: an optical imaging device configured to obtain a sample on a sample plate to generate an optical image of the sample, wherein the optical image includes a scaling pattern for determining the magnification of the microscopic device; an image sensor configured to generate a digital image from the optical image; a transmission device configured to transmit the digital image; and a receiving device configured to receive information from the cloud server and the mobile device.

The mobile device is configured to receive the digital image from the cloud server and the microscopic device; transmit a photographing parameter to the cloud server and the microscopic device; and transmit the digital image from the microscopic device to the cloud server.

The cloud server is configured to receive the digital image from the microscopic device and the mobile device; receive the photographing parameter from the mobile device and forward the photographing parameter to the microscopic device; transmit the digital image from the microscopic device to the mobile device; and analyze the digital image and transmit an analysis result to the mobile device.

In addition, in some embodiments according to the present disclosure, the following technical schemes may also be adopted:

The terms "front", "back", "top", "bottom", "over", and "under" in the present disclosure and claims, if present, are used for descriptive purposes and are not necessarily used to describe invariant relative positions. It is to be understood that the terms so used are interchangeable under appropriate circumstances, enabling the embodiments of the disclosure described herein. For example, capable of operating in other orientations than those shown or otherwise described herein.

As used herein, the term "exemplary" means "serving as an example, instance, or illustration" rather than as a "model" to be exactly reproduced. Any implementation illustratively described herein is not necessarily to be construed as preferred or advantageous over other implementations. Furthermore, the present disclosure is not to be bound by any expressed or implied theory presented in the preceding technical field, background, summary, or detailed description.

As used herein, the term "substantially" is meant to encompass any minor variation due to design or manufacturing imperfections, tolerances of devices or elements, environmental influences, and/or other factors. The term "substantially" also allows for differences from a perfect or ideal situation due to parasitic effects, noise, and other practical considerations that may exist in an actual implementation.

The above description may indicate elements or nodes or features that are "connected" or "coupled" together. As used herein, unless expressly stated otherwise, "connected" means that one element/node/feature is electrically, mechanically, logically, or otherwise directly connected to another element/node/feature (or direct communication). Similarly, unless expressly stated otherwise, "coupled" means that one element/node/feature can be mechanically, electrically, logically, or otherwise linked, directly or indirectly, with another element/node/feature to Interactions are allowed, even though the two features may not be directly connected. That is, "coupled" is intended to encompass both direct and indirect coupling of elements or other features, including connections that utilize one or more intervening elements.

In addition, certain terms may also be used in the following description for reference purposes only, and are thus not intended to be limiting. For example, the terms "first," "second," and other such numerical terms referring to structures or elements do not imply a sequence or order unless the context clearly dictates otherwise.

It should also be understood that the word "including/comprising" is used herein to indicate the presence of the indicated features, integers, steps, operations, units, and/or components, but does not preclude the presence or addition of one or more other features, integers, steps, operations, units and/or components and/or combinations thereof.

In the present disclosure, the term "providing" is used in a broad sense to encompass all manners of obtaining an object, thus "providing something" includes, but is not limited to, "purchasing," "preparing/manufacturing," "arranging/setting," "installing/ assembling," and/or "ordering" the objects, etc.

Those skilled in the art should appreciate that the boundaries between the operations described above are merely illustrative. Multiple operations may be combined into a single operation, a single operation may be distributed among additional operations, and operations may be performed at least partially overlapping in time. Furthermore, alternative embodiments may include multiple instances of a particular operation, and the order of operations may be changed in other various embodiments. However, other modifications, changes, and substitutions are equally possible. Accordingly, the present disclosure and drawings are to be regarded in an illustrative rather than a restrictive sense.

Although some specific embodiments of the present disclosure have been described in detail by way of examples, those skilled in the art should understand that the above examples are for illustration only, and not for the purpose of limiting the scope of the present disclosure. The various embodiments disclosed herein may be combined in any combination without departing from the scope of the present disclosure. It will also be understood by those skilled in the art that various modifications may be made to the embodiments without departing from the scope of the present disclosure. The scope of the present disclosure is defined by the claims.

**Claims**

1. An image processing device (1500), comprising:

   a receiving device (1501) configured to receive a digital image of a sample in a sample cell (1001) on a sample plate (1000) generated by a microscopic device, wherein the digital image includes a scaling pattern (1002);
   a storage device (1502) configured to store the digital image; and
   a processor (1503) configured to determine a magnification of the microscopic device based on the scaling pattern (1002), wherein to determine the magnification of the microscopic device based on the scaling pattern (1002), the processor (1503) is configured to:

   obtain the digital image generated by the microscopic device;
   determine a size of an image of the scaling pattern (1002) generated on an image sensor (101, 1401, 1901); and
   determine the magnification of the microscopic device based on a size of the scaling pattern (1002) on the sample plate (1000) and the size of the image of the scaling pattern (1002) generated on the image sensor (101, 1401, 1901);
   **characterized in that**,
   the scaling pattern (1002) is captured from the sample plate (1000), the scaling pattern (1002) including a first mark for identifying the sample plate (1000) and a second mark for identifying the sample cell (1001) of the sample plate (1000); and
   the processor (1503) is further configured to:

   determine a first serial number of the sample plate (1000) based on the first mark or determine a second serial number of the sample cell (1001) based on the second mark;
   determine a depth of the sample cell (1001) based on the first serial number or the second serial number; and
   analyze a sample of the digital image based on the magnification and the depth of the sample cell (1001) to obtain sample information related to the sample, wherein the sample information includes a concentration of the sample.

2. The image processing device (1500) of claim 1, wherein the digital image is generated by the microscopic device of claim 1 photographing a sample on the sample plate (1000), the sample plate (1000) including the scaling pattern (1002).

3. The image processing device (1500) of claim 1 or claim 2, wherein the receiving device (1501) is further configured to receive pattern information related to the scaling pattern (1002).

4. The image processing device (1500) of claim 3, wherein the processor (1503) is further configured to determine the magnification of the microscopic device based on the pattern information.

5. The image processing device (1500) of claim 3 or claim 4, wherein the processor (1503) is further configured to determine, based on the pattern information, a direction of the sample plate (1000) where the sample is located.

6. The image processing device (1500) of any one of claims 3-5, wherein the processor (1503) is further configured to classify the digital image based on the pattern information.

7. The image processing device (1500) of any one of claims 1-6, wherein the processor (1503) is further configured to analyze the digital image based on the scaling pattern (1002) to obtain second sample information related to the sample in the digital image.

8. The image processing device (1500) of claim 7, wherein the second sample information includes at least one of:

a diameter of the sample;
a value of major axis and a value of minor axis of the sample;
a size of a visual field of photographing; or
a concentration of the sample.

9. A method for determining a magnification of a microscopic device (100, 1400, 1900), comprising:

obtaining an image captured by the microscopic device, wherein the image includes a scaling pattern (1002) on a sample plate (1000);
determining a size of an image of the scaling pattern (1002) generated on an image sensor (101, 1401, 1901); and
determining the magnification of the microscopic device based on a size of the scaling pattern (1002) on the sample plate (1000) and the size of the image of the scaling pattern (1002) generated on the image sensor (101, 1401, 1901);
**characterized in that**,
the scaling pattern (1002) is captured from the sample plate (1000), the scaling pattern (1002) including a first mark for identifying the sample plate (1000) and a second mark for identifying a sample cell (1001) of the sample plate (1000); and
further comprising:

determining a first serial number of the sample plate (1000) based on the first mark or determine a second serial number of the sample cell (1001) based on the second mark;
determining a depth of the sample cell (1001) based on the first serial number or the second serial number; and
analyzing the sample of the digital image based on the magnification and the depth of the sample cell (1001) to obtain sample information related to the sample, wherein the sample information includes a concentration of the sample.

10. The method of claim 9, wherein the size of the image of the scaling pattern (1002) generated on the image sensor (101, 1401, 1901) is determined based on spacing between adjacent pixels of the image sensor (101, 1401, 1901) of the microscopic device.

11. The method of claim 9 or claim 10, wherein the scaling pattern (1002) includes a plurality of line segments, the method further comprising:

determining a plurality of values of magnification of the microscopic device based on a length of each of the plurality of line segments; and
designating an average value of the plurality of values of magnification as the magnification of the microscopic device.

12. The method of claim 9 or claim 10, wherein the scaling pattern (1002) includes a plurality of line segments, the method further comprising:
determining the magnification of the microscopic device based on a sum of lengths of the plurality of line segments.

13. A microscopic device (100, 1400, 1900), comprising: an optical imaging device (104, 1404, 1904) configured to generate an optical image of a sample in a sample cell (1001) on a sample plate (1000), wherein the optical image includes a scaling pattern (1002) for determining a magnification of the microscopic device (100, 1400, 1900); an image sensor (101, 1401, 1901) configured to generate the digital image of claim 1 based on the optical image; a processor (103) for determining a magnification according to the method of claim 9; a transmission device (1411, 1911) configured to transmit the digital image to the image processing device (1500) of claim 1.

14. A microscopic analysis system, comprising:

the microscopic device (100, 1400, 1900) of claim 13 and
the image processing device (1500) of any one of claims 1-8

**15.** A microscopic analysis system, comprising:

a cloud server,
a microscopic device (100, 1400, 1900) of claim 13; and
a mobile device,
wherein the microscopic device further includes:
a receiving device (1913) configured to receive information from the cloud server and the mobile device,
wherein the mobile device is configured to:

receive the digital image from the cloud server and the microscopic device;
transmit a photographing parameter to the cloud server and the microscopic device; and
transmit the digital image from the microscopic device to the cloud server,

wherein the cloud server is configured to:

receive the digital image from the microscopic device and the mobile device;
receive the photographing parameter from the mobile device and forward the photographing parameter to the microscopic device;
transmit the digital image from the microscopic device to the mobile device;
analyze the digital image and transmit an analysis result to the mobile device.

**Patentansprüche**

1. Bildverarbeitungsvorrichtung (1500), umfassend:

eine Empfangsvorrichtung (1501), die dazu konfiguriert ist, ein von einer mikroskopischen Vorrichtung erzeugtes digitales Bild einer Probe in einer Probenzelle (1001) auf einer Probenplatte (1000) zu empfangen, wobei das digitale Bild ein Skalierungsmuster (1002) beinhaltet;
eine Speichervorrichtung (1502), die dazu konfiguriert ist, das digitale Bild zu speichern; und
einen Prozessor (1503), der dazu konfiguriert ist, eine Vergrößerung der mikroskopischen Vorrichtung basierend auf dem Skalierungsmuster (1002) zu bestimmen, wobei der Prozessor (1503), um die Vergrößerung der mikroskopischen Vorrichtung basierend auf dem Skalierungsmuster (1002) zu bestimmen, dazu konfiguriert ist:

das von der mikroskopischen Vorrichtung erzeugte digitale Bild zu erhalten;
eine Größe eines Bildes des Skalierungsmusters (1002), das auf einem Bildsensor (101, 1401, 1901) erzeugt wird, zu bestimmen; und
die Vergrößerung der mikroskopischen Vorrichtung basierend auf einer Größe des Skalierungsmusters (1002) auf der Probenplatte (1000) und die Größe des Bildes des Skalierungsmusters (1002), das auf dem Bildsensor (101, 1401, 1901) erzeugt wird, zu bestimmen;
**dadurch gekennzeichnet, dass**
das Skalierungsmuster (1002) von der Probenplatte (1000) aufgenommen wird, wobei das Skalierungsmuster (1002) eine erste Markierung zum Identifizieren der Probenplatte (1000) und eine zweite Markierung zum Identifizieren der Probenzelle (1001) der Probenplatte (1000) beinhaltet; und
der Prozessor (1503) weiter dazu konfiguriert ist:

eine erste Seriennummer der Probenplatte (1000) basierend auf der ersten Markierung zu bestimmen, oder eine zweite Seriennummer der Probenzelle (1001) basierend auf der zweiten Markierung zu bestimmen;
eine Tiefe der Probenzelle (1001) basierend auf der ersten Seriennummer oder der zweiten Seriennummer zu bestimmen; und
eine Probe des digitalen Bildes basierend auf der Vergrößerung und der Tiefe der Probenzelle (1001) zu analysieren, um Probeninformationen in Bezug auf die Probe zu erhalten, wobei die Probeninformationen eine Konzentration der Probe beinhalten.

**2.** Bildverarbeitungsvorrichtung (1500) nach Anspruch 1, wobei das digitale Bild durch die mikroskopische Vorrichtung nach Anspruch 1 erzeugt wird, die eine Probe auf der Probenplatte (1000) fotografiert, wobei die Probenplatte (1000) das Skalierungsmuster (1002) beinhaltet.

**3.** Bildverarbeitungsvorrichtung (1500) nach Anspruch 1 oder Anspruch 2, wobei die Empfangsvorrichtung (1501) weiter dazu konfiguriert ist, Musterinformationen in Bezug auf das Skalierungsmuster (1002) zu empfangen.

**4.** Bildverarbeitungsvorrichtung (1500) nach Anspruch 3, wobei der Prozessor (1503) weiter dazu konfiguriert ist, die Vergrößerung der mikroskopischen Vorrichtung basierend auf den Musterinformationen zu bestimmen.

**5.** Bildverarbeitungsvorrichtung (1500) nach Anspruch 3 oder Anspruch 4, wobei der Prozessor (1503) weiter dazu konfiguriert ist, basierend auf den Musterinformationen eine Richtung der Probenplatte (1000) zu bestimmen, in der sich die Probe befindet.

**6.** Bildverarbeitungsvorrichtung (1500) nach einem der Ansprüche 3-5, wobei der Prozessor (1503) weiter dazu konfiguriert ist, das digitale Bild basierend auf den Musterinformationen zu klassifizieren.

**7.** Bildverarbeitungsvorrichtung (1500) nach einem der Ansprüche 1-6, wobei der Prozessor (1503) weiter dazu konfiguriert ist, das digitale Bild basierend auf dem Skalierungsmuster (1002) zu analysieren, um zweite Probeninformationen in Bezug auf die Probe in dem digitalen Bild zu erhalten.

**8.** Bildverarbeitungsvorrichtung (1500) nach Anspruch 7, wobei die zweiten Probeninformationen mindestens eines beinhalten von:

einem Durchmesser der Probe;
einem Wert der Hauptachse und einem Wert der Nebenachse der Probe;
einer Größe des Sichtfelds beim Fotografieren; oder
einer Konzentration der Probe.

**9.** Verfahren zum Bestimmen einer Vergrößerung einer mikroskopischen Vorrichtung (100, 1400, 1900), umfassend:

Erhalten eines durch die mikroskopische Vorrichtung erfassten Bildes, wobei das Bild ein Skalierungsmuster (1002) auf einer Probenplatte (1000) beinhaltet;
Bestimmen einer Größe eines Bildes des Skalierungsmusters (1002), das auf einem Bildsensor (101, 1401, 1901) erzeugt wird; und
Bestimmen der Vergrößerung der mikroskopischen Vorrichtung basierend auf einer Größe des Skalierungsmusters (1002) auf der Probenplatte (1000) und der Größe des Bildes des Skalierungsmusters (1002), das auf dem Bildsensor (101, 1401, 1901) erzeugt wird;
**dadurch gekennzeichnet, dass**
das Skalierungsmuster (1002) von der Probenplatte (1000) aufgenommen wird, wobei das Skalierungsmuster (1002) eine erste Markierung zum Identifizieren der Probenplatte (1000) und eine zweite Markierung zum Identifizieren einer Probenzelle (1001) der Probenplatte (1000) beinhaltet; und
weiter umfassend:

Bestimmen einer ersten Seriennummer der Probenplatte (1000) basierend auf der ersten Markierung, oder einer zweiten Seriennummer der Probenzelle (1001) basierend auf der zweiten Markierung;
Bestimmen einer Tiefe der Probenzelle (1001) basierend auf der ersten Seriennummer oder der zweiten Seriennummer; und
Analysieren der Probe des digitalen Bildes basierend auf der Vergrößerung und der Tiefe der Probenzelle (1001), um Probeninformationen in Bezug auf die Probe zu erhalten, wobei die Probeninformationen eine Konzentration der Probe beinhalten.

**10.** Verfahren nach Anspruch 9, wobei die Größe des Bildes des auf dem Bildsensor (101, 1401, 1901) erzeugten Skalierungsmusters (1002) basierend auf dem Abstand zwischen angrenzenden Pixeln des Bildsensors (101, 1401, 1901) der mikroskopischen Vorrichtung bestimmt wird.

**11.** Verfahren nach Anspruch 9 oder Anspruch 10, wobei das Skalierungsmuster (1002) eine Vielzahl von Liniensegmenten beinhaltet, wobei das Verfahren weiter umfasst:

Bestimmen einer Vielzahl von Vergrößerungswerten der mikroskopischen Vorrichtung basierend auf einer Länge jedes der Vielzahl von Liniensegmenten; und

Spezifizieren eines Durchschnittswerts der Vielzahl von Vergrößerungswerten als die Vergrößerung der mikroskopischen Vorrichtung.

**12.** Verfahren nach Anspruch 9 oder Anspruch 10, wobei das Skalierungsmuster (1002) eine Vielzahl von Liniensegmenten beinhaltet, wobei das Verfahren weiter umfasst:

Bestimmen der Vergrößerung der mikroskopischen Vorrichtung basierend auf einer Summe der Längen der Vielzahl von Liniensegmenten.

**13.** Mikroskopische Vorrichtung (100, 1400, 1900), umfassend: eine optische Bildgebungsvorrichtung (104, 1404, 1904), die dazu konfiguriert ist, ein optisches Bild einer Probe in einer Probenzelle (1001) auf einer Probenplatte (1000) zu erzeugen, wobei das optische Bild ein Skalierungsmuster (1002) zum Bestimmen einer Vergrößerung der mikroskopischen Vorrichtung (100, 1400, 1900) beinhaltet; einen Bildsensor (101, 1401, 1901), der dazu konfiguriert ist, das digitale Bild des Anspruchs 1 basierend auf dem optischen Bild zu erzeugen; einen Prozessor (103) zum Bestimmen einer Vergrößerung gemäß dem Verfahren des Anspruchs 9; eine Übertragungsvorrichtung (1411, 1911), die dazu konfiguriert ist, das digitale Bild an die Bildverarbeitungsvorrichtung (1500) nach Anspruch 1 zu übertragen.

**14.** Mikroskopisches Analysesystem, umfassend:

die mikroskopische Vorrichtung (100, 1400, 1900) nach Anspruch 13 und
die Bildverarbeitungsvorrichtung (1500) nach einem der Ansprüche 1-8.

**15.** Mikroskopisches Analysesystem, umfassend:

einen Cloud-Server,
eine mikroskopische Vorrichtung (100, 1400, 1900) nach Anspruch 13; und
eine mobile Vorrichtung,
wobei die mikroskopische Vorrichtung weiter beinhaltet:
eine Empfangsvorrichtung (1913), die dazu konfiguriert ist, Informationen von dem Cloud-Server und der mobilen Vorrichtung zu empfangen,
wobei die mobile Vorrichtung dazu konfiguriert ist:

das digitale Bild von dem Cloud-Server und der mikroskopischen Vorrichtung zu empfangen;
einen Fotografierparameter an den Cloud-Server und die mikroskopische Vorrichtung zu übertragen; und
das digitale Bild von der mikroskopischen Vorrichtung an den Cloud-Server zu übertragen,

wobei der Cloud-Server dazu konfiguriert ist:

das digitale Bild von der mikroskopischen Vorrichtung und der mobilen Vorrichtung zu empfangen;
den Fotografierparameter von der mobilen Vorrichtung zu empfangen und den Fotografierparameter an die mikroskopische Vorrichtung weiterzuleiten;
das digitale Bild von der mikroskopischen Vorrichtung an die mobile Vorrichtung zu übertragen;
das digitale Bild zu analysieren und ein Analyseergebnis an die mobile Vorrichtung zu übertragen.

**Revendications**

**1.** Dispositif de traitement d'image (1500), comprenant :

un dispositif de réception (1501) configuré pour recevoir une image numérique d'un échantillon dans une cellule d'échantillon (1001) sur une plaque d'échantillon (1000) générée par un dispositif microscopique, dans lequel l'image numérique inclut un motif de mise à l'échelle (1002) ;
un dispositif de stockage (1502) configuré pour stocker l'image numérique ; et
un processeur (1503) configuré pour déterminer un grossissement du dispositif microscopique sur la base du modèle de mise à l'échelle (1002), dans lequel pour déterminer le grossissement du dispositif microscopique sur la base du modèle de mise à l'échelle (1002), le processeur (1503) est configuré pour :

obtenir l'image numérique générée par le dispositif microscopique ;

déterminer une taille d'une image du motif de mise à l'échelle (1002) générée sur un capteur d'image (101, 1401, 1901) ; et

déterminer le grossissement du dispositif microscopique sur la base de la taille du motif de mise à l'échelle (1002) sur la plaque d'échantillon (1000) et de la taille de l'image du motif de mise à l'échelle (1002) générée sur le capteur d'image (101, 1401, 1901) ;

**caractérisé en ce que**

le motif de mise à l'échelle (1002) est capturé à partir de la plaque d'échantillon (1000), le motif de mise à l'échelle (1002) incluant une première marque pour identifier la plaque d'échantillon (1000) et une seconde marque pour identifier la cellule d'échantillon (1001) de la plaque d'échantillon (1000) ; et

le processeur (1503) est en outre configuré pour :

déterminer un premier numéro de série de la plaque d'échantillon (1000) sur la base de la première marque ou déterminer un second numéro de série de la cellule d'échantillon (1001) sur la base de la seconde marque ;

déterminer une profondeur de la cellule d'échantillon (1001) sur la base du premier numéro de série ou du second numéro de série ; et

analyser un échantillon de l'image numérique sur la base du grossissement et de la profondeur de la cellule d'échantillon (1001) pour obtenir des informations d'échantillon liées à l'échantillon, dans lequel les informations d'échantillon incluent une concentration de l'échantillon.

2. Dispositif de traitement d'image (1500) selon la revendication 1, dans lequel l'image numérique est générée par le dispositif microscopique selon la revendication 1 photographiant un échantillon sur la plaque d'échantillon (1000), la plaque d'échantillon (1000) incluant le motif de mise à l'échelle (1002).

3. Dispositif de traitement d'image (1500) selon la revendication 1 ou la revendication 2, dans lequel le dispositif de réception (1501) est en outre configuré pour recevoir des informations de motif liées au motif de mise à l'échelle (1002).

4. Dispositif de traitement d'image (1500) selon la revendication 3, dans lequel le processeur (1503) est en outre configuré pour déterminer le grossissement du dispositif microscopique sur la base des informations de motif.

5. Dispositif de traitement d'image (1500) selon la revendication 3 ou la revendication 4, dans lequel le processeur (1503) est en outre configuré pour déterminer, sur la base des informations de motif, une direction de la plaque d'échantillon (1000) sur laquelle l'échantillon est situé.

6. Dispositif de traitement d'image (1500) selon l'une quelconque des revendications 3-5, dans lequel le processeur (1503) est en outre configuré pour classer l'image numérique sur la base des informations de motif.

7. Dispositif de traitement d'image (1500) selon l'une quelconque des revendications 1-6, dans lequel le processeur (1503) est en outre configuré pour analyser l'image numérique sur la base du modèle de mise à l'échelle (1002) pour obtenir des secondes informations d'échantillon liées à l'échantillon dans l'image numérique.

8. Dispositif de traitement d'image (1500) selon la revendication 7, dans lequel les secondes informations d'échantillon incluent au moins l'un :

d'un diamètre de l'échantillon ;

d'une valeur de l'axe majeur et d'une valeur de l'axe mineur de l'échantillon ;

d'une taille du champ visuel d'une photographie ; ou

d'une concentration de l'échantillon.

9. Procédé de détermination d'un grossissement d'un dispositif microscopique (100, 1400, 1900), comprenant :

l'obtention d'une image capturée par le dispositif microscopique, dans lequel l'image inclut un motif de mise à l'échelle (1002) sur une plaque d'échantillon (1000) ;

la détermination d'une taille d'une image du motif de mise à l'échelle (1002) générée sur un capteur d'image (101, 1401, 1901) ; et

la détermination du grossissement du dispositif microscopique sur la base de la taille du motif de mise à l'échelle (1002) sur la plaque d'échantillon (1000) et de la taille de l'image du motif de mise à l'échelle (1002) générée sur le capteur d'image (101, 1401, 1901) ;

**caractérisé en ce que**

le motif de mise à l'échelle (1002) est capturé à partir de la plaque d'échantillon (1000), le motif de mise à l'échelle (1002) incluant une première marque pour identifier la plaque d'échantillon (1000) et une seconde marque pour identifier une cellule d'échantillon (1001) de la plaque d'échantillon (1000) ; et

comprenant en outre :

la détermination d'un premier numéro de série de la plaque d'échantillon (1000) sur la base de la première marque ou la détermination d'un second numéro de série de la cellule d'échantillon (1001) sur la base de la seconde marque ;

la détermination d'une profondeur de la cellule d'échantillon (1001) sur la base du premier numéro de série ou du second numéro de série ; et

l'analyse de l'échantillon de l'image numérique sur la base du grossissement et de la profondeur de la cellule d'échantillon (1001) pour obtenir des informations d'échantillon liées à l'échantillon, dans lequel les informations d'échantillon incluent une concentration de l'échantillon.

10. Procédé selon la revendication 9, dans lequel la taille de l'image du motif de mise à l'échelle (1002) générée sur le capteur d'image (101, 1401, 1901) est déterminée sur la base de l'espacement entre les pixels adjacents du capteur d'image (101, 1401, 1901) du dispositif microscopique.

11. Procédé selon la revendication 9 ou la revendication 10, dans lequel le motif de mise à l'échelle (1002) inclut une pluralité de segments de ligne, le procédé comprenant en outre :

la détermination d'une pluralité de valeurs de grossissement du dispositif microscopique sur la base d'une longueur de chaque segment de ligne de la pluralité de segments de ligne ; et

la désignation d'une valeur moyenne de la pluralité de valeurs de grossissement en tant que grossissement du dispositif microscopique.

12. Procédé selon la revendication 9 ou la revendication 10, dans lequel le motif de mise à l'échelle (1002) inclut une pluralité de segments de ligne, le procédé comprenant en outre :
la détermination du grossissement du dispositif microscopique sur la base d'une somme de longueurs de la pluralité de segments de ligne.

13. Dispositif microscopique (100, 1400, 1900), comprenant : un dispositif d'imagerie optique (104, 1404, 1904) configuré pour générer une image optique d'un échantillon dans une cellule d'échantillon (1001) sur une plaque d'échantillon (1000), dans lequel l'image optique inclut un motif de mise à l'échelle (1002) pour déterminer un grossissement du dispositif microscopique (100, 1400, 1900) ; un capteur d'image (101, 1401, 1901) configuré pour générer l'image numérique selon la revendication 1 sur la base de l'image optique ; un processeur (103) pour déterminer un grossissement selon le procédé de la revendication 9 ; un dispositif de transmission (1411, 1911) configuré pour transmettre l'image numérique au dispositif de traitement d'image (1500) selon la revendication 1.

14. Système d'analyse microscopique, comprenant :

le dispositif microscopique (100, 1400, 1900) selon la revendication 13 et

le dispositif de traitement d'image (1500) selon l'une quelconque des revendications 1-8.

15. Système d'analyse microscopique, comprenant :

un serveur infonuagique,
un dispositif microscopique (100, 1400, 1900) selon la revendication 13 ; et
un dispositif mobile,
dans lequel le dispositif microscopique inclut en outre :
un dispositif de réception (1913) configuré pour recevoir des informations en provenance du serveur infonuagique et du dispositif mobile,
dans lequel le dispositif mobile est configuré pour :

recevoir l'image numérique en provenance du serveur infonuagique et du dispositif microscopique ;

transmettre un paramètre de photographie au serveur infonuagique et au dispositif microscopique ; et
transmettre l'image numérique du dispositif microscopique au serveur infonuagique,

dans lequel le serveur infonuagique est configuré pour :

recevoir l'image numérique en provenance du dispositif microscopique et du dispositif mobile ;
recevoir le paramètre de photographie en provenance du dispositif mobile et transmettre le paramètre de photographie au dispositif microscopique ;
transmettre l'image numérique du dispositif microscopique au dispositif mobile ;
analyser l'image numérique et transmettre un résultat d'analyse au dispositif mobile.

**100**

FIG. 1

201

L

202

200

**FIG. 2**

302    301

300

D

**FIG. 3**

**FIG. 4**

502    501

**FIG. 5**

500

**FIG. 6A**

**FIG. 6B**

**FIG. 7**

**FIG. 8**

**FIG. 9**

1002    1001

1000

1005

1006

1003    1004

FIG. 10

FIG. 11

| Placing the sample plate may on the sample table | 1201 |

| Generating a digital image of the samples by the image sensor | 1202 |

| Processing the digital image by the processor | 1203 |

FIG. 12

**FIG. 13**

**FIG. 14**

Image,
information

```
        ┌──────────┐      ┌──────────┐      ┌──────────┐
  ─────► │   1501   │──────│   1502   │──────│   1504   │
        └──────────┘      └──────────┘      └──────────┘
                                │
                          ┌──────────┐
                          │          │
                          │   1503   │
                          │          │
                          └──────────┘
```

FIG. 15

FIG. 16

FIG. 17

**FIG. 18**

1900

```
              ┌──────┐
              │ 1913 │
              └──┬───┘
┌──────────┐ ┌──────┐ ┌──────┐ ┌──────┐
│   1901   ├─┤ 1902 ├─┤ 1912 ├─┤ 1911 │
└──────────┘ └──────┘ └──┬───┘ └──────┘
┌──────────┐           ┌──────┐
│          │           │ 1910 │
│   1904   │           └──────┘
│          │
└──────────┘
┌──────────┐
│   1905   │
└──────────┘
┌──────┐
│ 1906 │
└──────┘
```

**FIG. 19**

**FIG. 20**

**FIG. 21**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018130233 A1